# EUROPÄISCHE PATENTSCHRIFT

(11) **EP 2 419 615 B1**
(45) Veröffentlichungstag und Bekanntmachung des Hinweises auf die Patenterteilung: **24.08.2016**
(21) Anmeldenummer: 10714580.7
(22) Anmeldetag: 12.04.2010
(51) Int. Cl.: F02B 29/04, F02D 9/16

(54) **LADELUFTKANAL FÜR EINEN VERBRENNUNGSMOTOR**
CHARGE AIR DUCT FOR AN INTERNAL COMBUSTION ENGINE
CANAL D'AIR DE SURALIMENTATION POUR MOTEUR À COMBUSTION INTERNE

(30) Priorität: 17.04.2009 DE 102009017555; 10.06.2009 DE 102009025036; 12.03.2010 DE 102010011372; 12.03.2010 DE 102010011373
(43) Veröffentlichungstag der Anmeldung: 22.02.2012
(73) Patentinhaber: MAHLE Behr GmbH & Co. KG, 70469 Stuttgart (DE); MANN+HUMMEL GmbH, 71638 Ludwigsburg (DE)
(72) Erfinder: DIEM, Johannes, 71287 Weissach (DE); MÜLLER, Rolf, 71711 Steinheim (DE); HENTSCHEL, Gunther, 73066 Uhingen (DE); HUURDEMAN, Bernhard, 71691 Freiberg a.N. (DE); HUMMEL, Karl-Ernst, 74321 Bietigheim-Bissingen (DE); DEHNEN, Ulrich, 70806 Kornwestheim (DE); REHMANN, Achim, 75249 Kieselbronn (DE)
(74) Vertreter: Grauel, Andreas
(86) Internationale Anmeldenummer: PCT/EP2010/002247
(87) Internationale Veröffentlichungsnummer: WO 2010/118848

(56) Entgegenhaltungen:
- EP-A2- 1 512 853
- EP-A2- 1 845 242
- EP-A2- 2 048 416
- EP-A2- 2 161 429
- WO-A1-2005/033489
- WO-A1-2007/097750
- DE-A1-102007 040 661
- FR-A1- 2 916 020
- FR-A1- 2 920 853
- JP-A- 60 050 225
- US-A- 5 911 212

## Beschreibung

Die Erfindung betrifft einen Ladeluftkanal für einen Verbrennungsmotor nach dem Oberbegriff des Anspruchs 1.

DE 10 2007 040 661 A1 beschreibt ein Saugrohr für einen Verbrennungsmotor, in das ein kühlmitteldurchströmter Wärmetauscher zur Kühlung von Ladeluft integriert ist. Mittels einer ersten Stellklappe kann ein Ladeluftstrom einstellbar durch den Wärmetauscher oder einen Bypasskanal geleitet werden. Eine zweite, separate Stellklappe erfüllt zudem die Funktion einer Drosselklappe.

FR 2 920 853 A1 offenbart ein Saugrohr für einen aufgeladenen Verbrennungsmotor mit einem Ladeluftkühler und einem diesen umgehenden Bypasskanal. Mit einer drehbaren Walze wird in einer ersten Stellung der Ladeluftstrom in den Ladeluftkühler und in einer zweiten Stellung in den Bypasskanal eingestellt. In einer weiteren Stellung der Walze kann der Ladeluftstrom gedrosselt werden.

WO 2005/033489 A1 offenbart einen Ladeluftkühler bestehend aus einem Wärmeübertragerblock mit von Ladeluft durchströmbaren Rohren, wobei ein Teil der Rohre mittels eines im Luftkasten angeordneten Absperrorganes verschließbar ist.

J Es ist die Aufgabe der Erfindung, einen Ladeluftkanal mit einem Wärmetauscher zur Kühlung der Ladeluft anzugeben, der mit einfachen Mitteln eine Anpassung an verschiedene Betriebssituationen erlaubt.

Diese Aufgabe wird für einen eingangs genannten Ladeluftkanal erfindungsgemäß mit den kennzeichnenden Merkmalen des Anspruchs 1 gelöst. Durch die Integration der Funktionen kann mittels nur eines einzigen Stellglieds die Anpassung der Ladeluftführung an verschiedene Betriebsbedingungen vorgenommen werden. Insbesondere sind dies im Fall eines Dieselmotors ein Normalbetrieb (Abgasführung über den Wärmetauscher), ein Kaltstartbetrieb (Abgasführung über den Bypass) und ein Drosselbetrieb (zum Beispiel für eine Regeneration eines Partikelfilters und/oder ein Abstellen des Motors). Unter Ladeluft im Sinne der Erfindung wird dabei verdichtete Luft sowohl mit als auch ohne Beimengungen von rückgeführtem Abgas verstanden. Die Erfindung ist bevorzugt bei Dieselmotoren einsetzbar, kann aber je nach Anforderungen auch für Ottomotoren oder andere Verbrennungsmotoren eingesetzt werden.

Bei einer allgemein bevorzugten Ausführungsform der Erfindung ist der Ladeluftkanal als Saugrohr des Verbrennungsmotors ausgebildet. Auf diese Weise wird eine kompakte integrierte Einheit mit Wärmetauscher und Stellglied geschaffen, die unmittelbar an einen Zylinderkopf des Motors angebracht werden kann und eine Kühlung und nach Betriebsart unterschiedliche Ladeluftführung erlaubt.

Erfindungsgemäß ist das Stellglied in einem bevorzugt im Wesentlichen zylindrischen Kanal angeordnet, wobei Ladeluftstrom im Bereich des Kanals um etwa 90°umgelenkt wird. Eine solche Anordnung des Stellglieds ermöglicht große Ladeluftdurchsätze bei kleiner raumsparender Bauform.

gemäß der Erfindung ist es vorgesehen, dass das Stellglied als um eine Achse drehbare Walze ausgebildet ist. Dies ermöglicht eine kompakte und zuverlässige Bauweise. Die Walze kann zum Beispiel als Hohlwalze ausgebildet sein, wobei der Ladeluftstrom in axialer Richtung in die Walze eintritt und durch eine radiale Öffnung in der Walzenwand austritt. Je nach Stellung der Walze in Drehrichtung überdeckt dabei die Öffnung ganz, teilweise oder gar nicht mit einer Zuführung zu dem Wärmetauscher oder auch einer Öffnung des Bypass.

Weiterhin bevorzugt hat das Stellglied eine Sperrfläche, wobei die Sperrfläche eine geometrische Struktur zur Reduzierung des Durchtrittsquerschnitts hat. Eine solche geometrische Struktur kann etwa als gezahnte Kante des Stellglieds, zum Beispiel einer Kante der Öffnung einer Hohlwalze, ausgebildet sein oder auch als definierte Durchbrechungen im Bereich der Kante. Die Wand der Hohlwalze bildet dabei die Sperrfläche aus. Hierdurch kann insbesondere eine genaue Einstellung eines Durchtrittsquerschnitts mittels des Stellglieds erfolgen. Zudem wird es ermöglicht, durch die geometrische Struktur einen nicht linearen Zusammenhang zwischen dem Durchtrittsquerschnitt und einer Bewegung des Stellglieds zu schaffen. Besonders gut wird das Stellglied durch solche Maßnahmen auch als Drosselklappe eines Ottomotors verwendbar, bei dem allgemein besonders hohe Anforderungen an die Genauigkeit des eingestellten Durchtrittsquerschnitts bestehen.

Bei einer kompakten und effektiven Bauform eines erfindungsgemäßen Ladeluftkanals hat das Gehäuse einen Umlenkbereich zur U-förmigen Umlenkung der Ladeluft, wobei der Umlenkbereich in bevorzugter Detailgestaltung stromabwärts des Wärmetauschers und stromaufwärts eines weiteren Wärmetauschers angeordnet ist. Neben einer guten Nutzung des im Motorraum zur Verfügung stehenden Bauraums kann dabei zudem eine zweistufige Auslegung der Ladeluftkühlung durch separate Wärmetauscher erfolgen. Alternativ kann es sich bei dem Wärmetauscher und dem weiteren Wärmetauscher auch um verschiedene Abschnitte eines einzelnen Wärmetauschers handeln.

Allgemein bevorzugt ist das Gehäuse aus zumindest zwei Gehäuseteilen aufgebaut. Die Gehäuseteile können nach einer Montage miteinander verschweißt werden oder auch verschraubt oder auf sonstige Art aneinander festgelegt sein. Die Gehäuseteile können bevorzugt aus einem Kunststoff, zum Beispiel einem Polyamid, bestehen.

Zur weiteren Optimierung ist an dem Gehäuse ein Zuganker vorgesehen, wobei durch den Zuganker eine Versteifung einer Gehäusewand im Bereich einer Dichtung des Stellglieds bewirkt ist. Hierdurch wird auch unter Vibrationen und/oder hohen Temperaturen und Drücken eine Leckage im Bereich der Dichtung verhindert.

Bei einer vorteilhaften Detailgestaltung liegt das Stellglied an zumindest einer Dichtung gleitend an, um einen Leckstrom der Ladeluft durch einen je nach Stellung des Stellglieds ungewünschten Pfad zu verhindern. Zweckmäßig kann dabei die Dichtung an das Gehäuse angegossen sein.

Allgemein vorteilhaft ist das Gehäuse zumindest abschnittsweise mehrwandig ausgebildet, wobei in möglicher Detailgestaltung ein Kühlmittel zwischen den Gehäusewänden strömt. Alternativ oder ergänzend zur Durchströmung mit einem Kühlmittel kann auch ein Hitzschutzblech, zum Beispiel aus Metall, vorgesehen sein. Allgemein ermöglicht dies die Verwendung von kostengünstigen Kunststoffen wie etwa Polyamiden für das Gehäuse selbst dann, wenn in bestimmten Bereichen Ladelufttemperaturen von über 200 °C vorkommen.

Bei einer weiteren Ausführungsform der Erfindung ist das Gehäuse über zwei insbesondere parallelen Reihen von Verschraubungen an dem Verbrennungsmotor festlegbar, wobei in bevorzugter, aber nicht notwendiger Detailgestaltung zumindest eine der Verschraubungen einen Teil des Gehäuses durchgreift. Hierdurch ist eine Festlegung zum Beispiel am gaseinlassseitigen Flansch des Verbrennungsmotors unter besonders wenig Verspannung ermöglicht.

Bei einer allgemein bevorzugten Variante ist der Wärmetauscher zwischen den parallelen Reihen von Verschraubungen angeordnet, so dass er platzsparend angeordnet und gut gegen Vibrationen abgestützt ist.

Bei einer bevorzugten Weiterbildung der Erfindung ist zudem ein weiterer Wärmetauscher vorgesehen, so dass bei vorgegebener Kühlleistung eine optimale Anpassung an den Bauraum ermöglicht ist. Bei einer ersten alternativen Detailgestaltung ist dabei der weitere Wärmetauscher ebenfalls zwischen den Reihen von Verschraubungen angeordnet, so dass eine insgesamt besonders stabile und kompakte Anordnung gegeben ist. Je nach Anforderungen an den Bauraum kann der zweite Wärmetauscher aber auch außerhalb der Reihen von Verschraubungen angeordnet sein, zum Beispiel oberhalb einer oberen Verschraubungsreihe oder unterhalb einer unteren Verschraubungsreihe. Zudem wird hierdurch eine größere Bauhöhe des außerhalb der Verschraubungsreihen angeordneten Wärmetauschers ermöglicht. Allgemein ist es bei allen genannten Anordnungen vorteilhaft, dass keine Verschraubung den Bereich des Netzes bzw. der aktiven Kühlfläche eines Wärmetauschers durchgreift, da dies für viele Bauarten von Wärmetauschern eher aufwendig zu realisieren ist.

Bei je nach Bauraumanforderungen bevorzugten Abwandlungen können die Wärmetauscher entweder eine unterschiedliche Länge oder auch eine gleiche Länge quer zu der Strömungsrichtung aufweisen. Eine gleiche Länge ist vorteilhaft in Bezug auf ein Gleichteilekonzept und auf eine Vergleichmäßigung der Strömungswiderstände an den Wärmetauschern. Eine Bauform mit verschiedener Wärmetauscherlänge ermöglicht eine besonders optimale Ausnutzung von gegebenen Bauräumen.

Allgemein vorteilhaft im Interesse einer kompakten, kurzbauenden Ausgestaltung ist es vorgesehen, dass der Ladeluftstrom nach dem stromaufwärtigen der beiden Wärmetauscher und vor dem stromabwärtigen der beiden Wärmetauscher eine Umlenkung, insbesondere um 80°, erfährt. Bei einer vorteilhaften Weiterbildung kann der Ladeluftstrom nach dem stromabwärtigen der beiden Wärmetauscher eine weitere Umlenkung erfahren. Bei einer ersten Detailgestaltung kann dies in Form einer um das Stellglied gebogenen Führung erfolgen. Bei einer alternativen oder ergänzenden Detailgestaltung erfolgt die Umlenkung um wenigstens 90°. Die Folge von Umlenkungen kann insgesamt zum Beispiel einen U-flow Wärmetauscher oder auch einen S-flow-Wärmetauscher ausbilden. Die Drehrichtung der Umlenkungen des Ladeluftstroms kann bei beiden vorgenannten Detailgestaltungen im Verlauf des Ladeluftkanals das Vorzeichen wechseln, wodurch eine gute Durchmischung der die Wärmetauscher verlassenen Luft bei geringem oder kaum vorhandenen Druckabfall erzielt wird.

Bei bevorzugten Ausführungsformen der Erfindung beträgt die Anzahl der Verschraubungen entweder vier, bevorzugt zum Anschluss an einen Dreizylindermotor, oder fünf, bevorzugt zum Anschluss an einen Vierzylindermotor. Hierdurch wird die Anzahl an Verschraubungen möglichst gering gehalten, wobei zugleich eine verspannungsfreie und sichere Halterung des Ladeluftkanals am Verbrennungsmotor gegeben ist.

Zur einfachen und sicheren Montage ist es vorgesehen, dass eine Ausnehmung für die das Gehäuse durchgreifende Verschraubung materialeinheitlich einstückig mit dem Gehäuse ausgebildet ist. Je nach Bauraum kann die Ausnehmung in Form einer Rinne oder eines Tunnels ausgebildet sein, wobei auch beide Varianten an dem gleichen Ladeluftkanal vorhanden sein können. Die Herstellung einer solchen Ausnehmung kann im Zuge eines Spritzgussverfahrens erfolgen, mit dem ein Teil oder das gesamte Gehäuse aus Kunststoff hergestellt wird. Grundsätzlich ist auch ein anderes Gehäusematerial als Kunststoff, zum Beispiel Aluminium, denkbar.

Bei einer allgemein bevorzugten Ausführungsform umfasst der Wärmetauscher einen Stapel von Flachrohren, wobei die Flachrohre von einem kühlenden Fluid durchströmt und von der Ladeluft umströmt werden. Die Flachrohre können etwa zwischen einem oberen und einem unteren Kasten angeordnet sein. Bevorzugt sind einem der Kästen beide Anschlüsse für das die Flachrohre durchströmende Kühlmittel vorgesehen. Flachrohre, zwischen den Flachrohren gegebenenfalls vorgesehene Rippen, Kästen und je nach Anforderungen auch die Kühlmittelanschlüsse können als gemeinsam kassetierter Aluminium-Wärmetauscher in einem Lötofen verlötet werden.

Bei einem allgemein bevorzugten Ausführungsbeispiel ist zusätzlich zu dem Stellglied ein Drosselglied vorgesehen. Besonders bevorzugt ist durch das Drosselglied eine vollständige Absperrung der Ladeluft einstellbar. Eine solche vollständige Absperrung kann zum Beispiel dem sicheren Abstellen eines Dieselmotors dienen. Zudem kann das Drosselglied zur Bereitstellung eines ausreichenden Unterdrucks etwa für eine Abgas-Rückführung im Teillastbereich unterstützend wirken. Allgemein kann dabei seitens des Stellglieds auf die Möglichkeit einer starken Drosselung oder auch nur einer vollständigen Absperrung des Ladeluftstroms verzichtet werden, wodurch sich der bauliche Aufwand bezüglich einer Abdichtung des Stellglieds verringert. Insbesondere bei Ausbildung des Stellglieds in Walzenform kann seine Bauweise hierdurch einfach gehalten werden.

Bei einer vorteilhaften Weiterbildung der Erfindung hat dabei das Drosselglied einen elektrisch steuerbaren Aktuator, der zusätzlich zu einem elektrisch steuerbaren Aktuator des Stellglieds vorgesehen ist. In bevorzugter, aber nicht notwendiger Weiterbildung sind dabei die elektrisch steuerbaren Aktuatoren von Drosselglied und Stellglied unmittelbar elektrisch verkoppelt. Hierdurch kann auf eine separate Ansteuerung z.B. über einen Steuersignalbus verzichtet werden, wodurch zum Beispiel eine Endstufe eingespart werden kann. Eine solche elektrische Verkoppelung kann auf einfache Weise wie etwa mittels eines Kontaktschalters erfolgen. Bei Erreichen einer Schließstellung (bzw. Öffnen) des Stellglieds könnte zum Beispiel der Kontaktschalter überfahren (bzw. freigegeben) werden, so dass hierdurch der Aktuator des Drosselglieds zum Zweck des vollständigen Schließens (Öffnens) des Drosselglieds unmittelbar betätigt wird.

Bei einer alternativen Ausgestaltung der Erfindung sind das Drosselglied und das Stellglied mittels einer Koppelmechanik miteinander verbunden. Hierdurch kann auf einen separaten Antrieb bzw. Aktuator des Drosselglieds verzichtet werden. Durch die Koppelmechanik wird zum Beispiel ein Verfahren des Stellglieds mittels Gleitsteinen, Lenkern, Wellen und/oder weiteren mechanischen Elementen auf das Drosselglied übertragen. Die Mechanik kann zum Beispiel so ausgelegt sein, dass nur ein letzter Wegabschnitt im Zuge einer Schließung des Stellglieds zu einem Schließen des Drosselglieds führt, während das Drosselglied über den überwiegenden Teil einer Verfahrung des Stellglieds geöffnet ist.

Ganz allgemein kann bezüglich des Antriebs der Verstellung von Stellglied und Drosselglied eine beliebige Anordnung je nach gegebenen Anforderungen vorliegen, insbesondere mittels zwei separaten elektrischen Aktuatoren, mittels einem oder zwei mechanischen Aktuatoren (z.B. mit Unterdruckdose) oder mittels einem insbesondere elektrischen Aktuator mit einer vorstehend erwähnten Koppelmechanik.

Bei einer weiteren Ausführungsform der Erfindung ist stromabwärts des Wärmetauschers ein weiterer Wärmetauscher vorgesehen, wobei in der zweiten Stellung die Ladeluft unter Umgehung des Wärmetauschers durch den Bypass geführt ist und nachfolgend den weiteren Wärmetauscher durchströmt. In bevorzugter, aber nicht notwendiger Detailgestaltung handelt es sich bei dem Wärmetauscher um einen Hochtemperatur-Wärmetauscher und bei dem weiteren Wärmetauscher um einen N iedertemperatur-Wärmetauscher. Ein Hochtemperatur-Wärmetauscher wird dabei typisch von Motor-Kühlmittel von üblichen Betriebstemperaturen von z.B. 90 °C durchströmt, während der Niedertemperatur-Wärmetauscher von kälterem Kühlmittel zum Beispiel eines Niedertemperaturzweigs des Kühlsystems durchströmt wird. Insgesamt kann hierdurch verhindert werden, dass bei Betriebsbedingungen wie etwa einem Teillastbereich bei betriebswarmem Motor die Ladeluft zunächst durch den ersten Wärmetauscher aufgeheizt würde. Im Teillastbereich kann die Ladeluft den Verdichter durchaus mit Temperaturen unterhalb der Hauptkühlmitteltemperatur bzw. unterhalb von 90 °C verlassen. Auf diese Weise kann der Wirkungsgrad der Ladeluftkühlung und somit des Verbrennungsmotors im Teillastbereich verbessert werden.

Es besteht dabei eine mögliche, aber nicht notwendige Ausführungsform der Erfindung darin, dass der Ladeluftkanal ausschließlich über einen dergestalt geführten Bypass verfügt, so dass die Ladeluft immer zumindest durch den weiteren Wärmetauscher geführt ist.

Bei einer weiteren möglichen Ausführungsform mit zwei Wärmetauschern ist es vorteilhaft vorgesehen, dass in einer vierten Stellung des Stellglieds die Ladeluft von dem Eintritt zu einem zweiten Bypass geführt ist, wobei der zweite Bypass stromabwärts des weiteren Wärmetauschers mündet. Hierdurch ist es möglich, bei entsprechenden Betriebsbedingungen wie etwa einem Kaltstart eine vollständige Umgehung der Wärmetauscher bzw. der Ladeluftkühlung einzustellen. Besonders bevorzugt kann dies in Verbindung mit einer Abgas-Rückführung erfolgen, so dass ein vor allem unter Kaltstartbedingungen besonders kritischer Anfall von Kondensat an den Wärmetauschern vermieden werden kann.

Je nach Anforderungen an den Bauraum kann es bei einer Ausführungsform mit zwei Wärmetauschern vorgesehen sein, dass das Stellglied im Wesentlichen in einer Ebene mit den beiden Wärmetauschern angeordnet ist, insbesondere zudem in einer Ebene mit dem Austritt des Ladeluftkanals. In einer solchen Anordnung ist die Führung von Verschraubungen zur Festlegung des Ladeluftkanals an dem Verbrennungsmotor besonders einfach realisierbar.

In hierzu alternativer Ausgestaltung kann es auch vorgesehen sein, dass die beiden Wärmetauscher und der Austritt im Wesentlichen in einer Ebene angeordnet sind, wobei das Stellglied außerhalb dieser Ebene, insbesondere vollständig oberhalb oder vollständig unterhalb der Ebene, angeordnet ist. Eine solche Bauform ist besonders kompakt und kurzbauend, so dass der in vielen Fällen neben dem Verbrennungsmotor für einen Ladeluftkanal zur Verfügung stehende Bauraum optimal genutzt werden kann.

Weitere Vorteile und Merkmale der Erfindung ergeben sich aus dem nachfolgend beschriebenen Ausführungsbeispiel sowie aus den abhängigen Ansprüchen.

Nachfolgend wird ein Ausführungsbeispiel der Erfindung beschrieben und anhand der anliegenden Zeichnungen näher erläutert.
- Fig. 1: zeigt eine schematische räumliche Darstellung eines erfindungsgemäßen Ladeluftkanals.
- Fig. 2: zeigt eine schematische Schnittansicht durch den Ladeluftkanal aus Fig. 1 in einer ersten Stellung eines Stellglieds.
- Fig. 3: zeigt eine Schnittansicht entlang der Linie A-A aus Fig. 2.
- Fig. 4: zeigt den Ladeluftkanal aus Fig. 2 in einer zweiten Stellung eines Stellglieds.
- Fig. 5: zeigt den Ladeluftkanal aus Fig. 2 in einer dritten Stellung eines Stellglieds.
- Fig. 6a bis Fig. 6d: zeigen eine weitere Ausführungsform der Erfindung in räumlicher Ansicht und in Draufsichten von der Seite, von vorne und von hinten.
- Fig. 7a bis Fig. 7d: zeigen eine weitere Ausführungsform der Erfindung in räumlicher Ansicht und in Draufsichten von der Seite, von vorne und von hinten.
- Fig. 8a bis Fig. 8d: zeigen eine weitere Ausführungsform der Erfindung in räumlicher Ansicht und in Draufsichten von der Seite, von vorne und von hinten.
- Fig. 9: zeigt eine weitere Ausführungsform der Erfindung in räumlicher Ansicht.
- Fig. 10a bis 10e: zeigen eine weitere Ausführungsform der Erfindung in zwei räumlichen Ansichten sowie Draufsichten von der Seite, von oben und von vorne.
- Fig. 11a bis 11d: zeigen eine weitere Ausführungsform der Erfindung in räumlicher Ansicht und in Draufsichten von oben und von den Seiten.
- Fig. 12a bis 12d: zeigen eine weitere Ausführungsform der Erfindung in räumlicher Ansicht und in Draufsichten von oben und von den Seiten.
- Fig. 13: zeigt eine Skizze einer Koppelmechanik von Drosselglied und Stellglied einer weiteren Ausführungsform der Erfindung.
- Fig. 14: zeigt eine Skizze einer Abwandlung der Koppelmechanik aus Fig. 13.
- Fig. 15: zeigt eine auskonstruierte Variante einer Koppelmechanik in Anlehnung an das Beispiel aus Fig. 13.

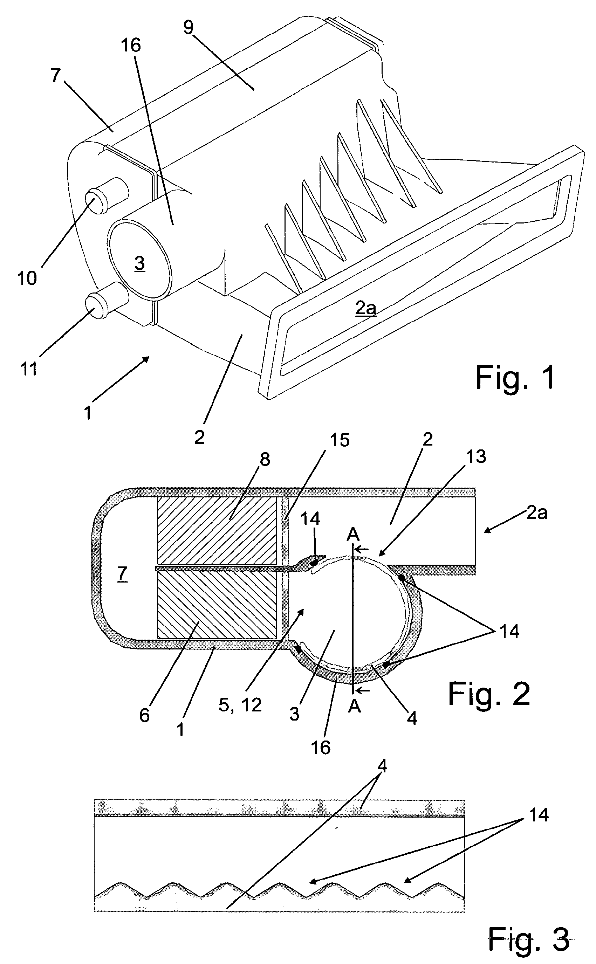

Der erfindungsgemäße Ladeluftkanal gemäß Fig. 1 bis Fig. 5 ist als Saugrohr eines Verbrennungsmotors ausgebildet, bei dem ein aus Polyamid bestehendes Gehäuse 1 des Ladeluftkanals einen Sammlerbereich 2 umschließt, der mit einem Ladeluftaustritt 2a an einen Zylinderkopf eines Verbrennungsmotors, vorliegend eines Dieselmotors, angeflanscht wird.

Das Gehäuse 1 hat einen Eintritt 3, in die die von einem Verdichter, z.B. einem Abgasturbolader, verdichtete und erhitzte Ladeluft einströmt. Der Eintritt 3 hat vorliegend einen kreisrunden Querschnitt und verlängert sich zu einem zylindrischen Kanal 16, in dem ein nach Art einer Walze ausgeformtes Stellglied 4 positioniert ist. Das Stellglied 4 umfasst eine mittels eines nicht dargestellten Aktuators drehbare Hohlwalze, in deren Wandung eine Öffnung 5 vorgesehen ist. Die Wandung der Hohlwalze 4 stellt eine radial gerichtete Austrittsöffnung für die Ladeluft dar, die nach Eintritt in das Gehäuse zunächst axial in die Hohlwalze 4 einströmt und dann im Wesentlichen um 90° umgelenkt die Hohlwalze 4 durch die Öffnung 5 verlässt.

In dem zylindrischen Kanal 16 sind mehrere Durchtritte 12, 13 vorgesehen, mit denen die Öffnung 5 je nach Drehstellung überdeckt. Um Leckströme von Ladeluft zu vermeiden, sind zudem mehrere Dichtungen 14 in der Wand des zylindrischen Kanals 16 angeordnet, die im vorliegenden Beispiel als an das Gehäusematerial angegossene Dichtungsstreifen ausgebildet sind.

Um dem Gehäuse 1 und insbesondere der Position der Dichtungen 14 eine ausreichende Stabilität gegenüber dem Ladeluftdruck und anderen Einflüssen zu verschaffen, ist zudem ein Zuganker 15 in der Nähe des zylindrischen Kanals 16 an dem Gehäuse 1 vorgesehen.

In einer ersten Stellung des Stellglieds gemäß Fig. 2 liegt die Öffnung 5 in Überdeckung mit einem ersten Durchtritt 12 in dem Gehäuse 1. Dabei strömt die Ladeluft aus der Öffnung 5 des Stellglieds 4 zu einem in dem Gehäuse 1 angeordneten, flüssigkeitsgekühlten Wärmetauscher 6, dem ein Umlenkbereich 7 und nach Umlenkung um 180° ein weiterer Wärmetauscher 8 folgt. Beim Durchströmen der Wärmetauscher 6, 8 wird Wärmeenergie der Ladeluft an das Kühlfluid der Wärmetauscher abgegeben.

Vorliegend (siehe Fig. 1) sind die Wärmetauscher 6, 8 als verschiedene Bereiche bzw. Abschnitte eines einzelnen Wärmetauschereinsatzes 9 ausgebildet, der nur einen Zufluss 10 und einen Abfluss 11 für Kühlfluid hat. Alternativ können aber auch zwei separate Wärmetauscher vorgesehen sein, die jeweils einen Zufluss und einen Abfluss für identisches oder auch verschiedenes Kühlfluid haben. Hierdurch können die separaten Wärmetauscher insbesondere mit Kühlfluiden verschiedener Temperatur zur Effizienzsteigerung der Ladeluftkühlung betrieben werden. Die Bauform des Ladeluftkanals bezüglich der Wärmetauscher kann auch als U-flow-Kühler bezeichnet werden.

Nach Austritt aus dem weiteren Wärmetauscher 8 durchströmt die Ladeluft den Sammlerbereich und tritt dann in den Verbrennungsmotor ein.

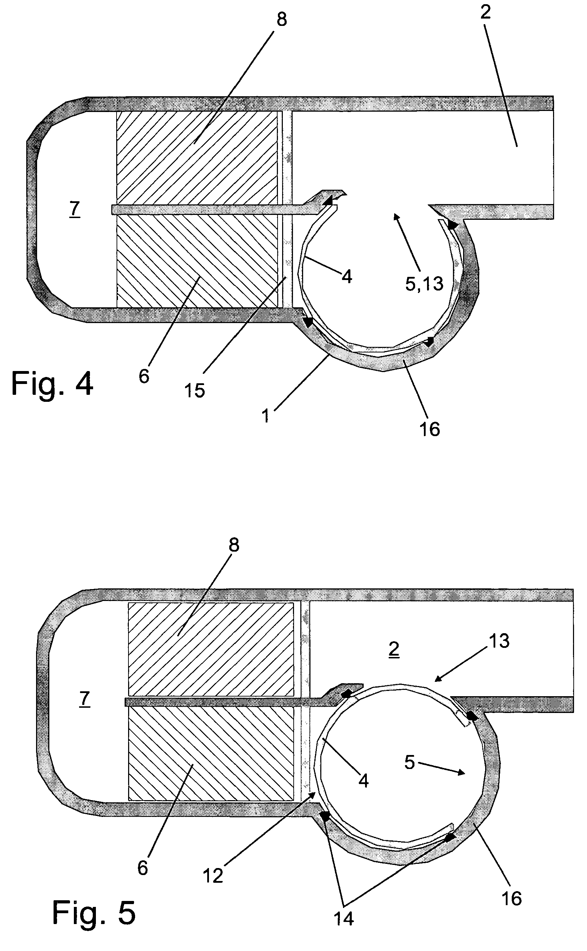

In einer zweiten Stellung der Hohlwalze 4 gemäß Fig. 4 ist der Weg zu dem ersten Durchtritt 12 durch die Wandung der Hohlwalze als Sperrfläche verschlossen, und die Öffnung 5 deckt sich mit einem zweiten Durchtritt 13, der als Bypass in einer an den zylindrischen Kanal 16 angrenzenden Wand des Sammlerbereichs vorgesehen ist. In dieser Stellung strömt die Ladeluft somit unmittelbar von dem Eintritt 3 durch die Hohlwalze 4 in den Sammlerbereich 2, so dass keine Kühlung durch die Wärmetauscher 6,8 erfolgt. Eine solche Betriebsart wird zum Beispiel in einer Kaltstartphase gewählt, um ein schnelles Erreichen der Betriebstemperatur des Verbrennungsmotors zu ermöglichen.

Insbesondere kann der Ladeluft ein Anteil an rückgeführtem Abgas beigemengt sein. Die Zumischung des Abgases kann vor einem Eintritt in den erfindungsgemäßen Ladeluftkanal erfolgen oder auch in dem Ladeluftkanal selbst (nicht dargestellt).

Bei einer dritten Stellung der Hohlwalze 4 gemäß Fig. 5 liegt die Öffnung 5 gegenüber der Wand des zylindrischen Kanals 16, so dass ein vollständiger Verschluss bzw. eine vollständige Reduzierung des Durchtrittsquerschnitts der Ladeluft gegeben ist.

Bei einer nicht gezeigten Zwischenstellung kann die Öffnung 5 sich nur teilweise mit dem ersten Durchtritt oder auch dem zweiten Durchtritt 13 überlappen, so dass eine einstellbare, stufenlose Reduzierung des Durchtrittsquerschnitts bzw. eine einstellbare Drosselung des Ladeluftstroms erzielt wird. Um eine hohe Genauigkeit der Einstellung zu gewährleisten, hat die Sperrfläche bzw. Wandung der Hohlwalze angrenzend an die Öffnung 5 keine glatte Kante, sondern eine geometrische Struktur in Form einer Zahnung 14 (siehe Fig. 3). Die Zahnung kann zudem noch in Richtung zur Walzenmitte angewinkelt sein, damit die Walze 4 beim Drehen nicht an dem Gehäuse 1 hängen bleibt.

Für Benzinmotoren kann die Anwendung einer Walzendrossel aufgrund von Bauraumrestriktionen ebenfalls interessant sein, jedoch sollte hierzu eine genauere Drosselung, z.B. über größere Verzahnungen, möglich sein. Die Stellung des offenen Bypasses kann hierbei entfallen, da die Vorteile für den Verbrauch kaum messbar sind.

Im Betrieb wird die Walze 4 von der Stellung "offene Drosselklappe mit Ladeluftkühlung" (Fig. 2) über die Stellung "Bypass offen" (Fig. 4) bis zur Stellung "Drosselklappe geschlossen" (Fig. 5) gemäß der Zeichnungen im Uhrzeigersinn gedreht. Die Möglichkeit, nicht über den Bypasskanal anzudrosseln kann ausgehend von der Stellung gemäß Fig. 2 durch eine Drehung gegen den Uhrzeigersinn erreicht werden.

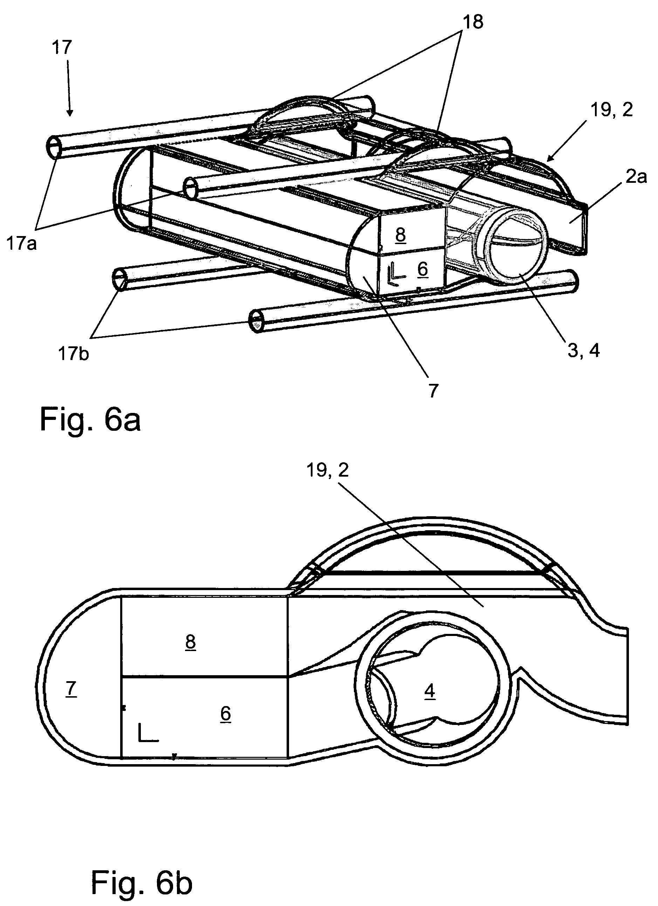

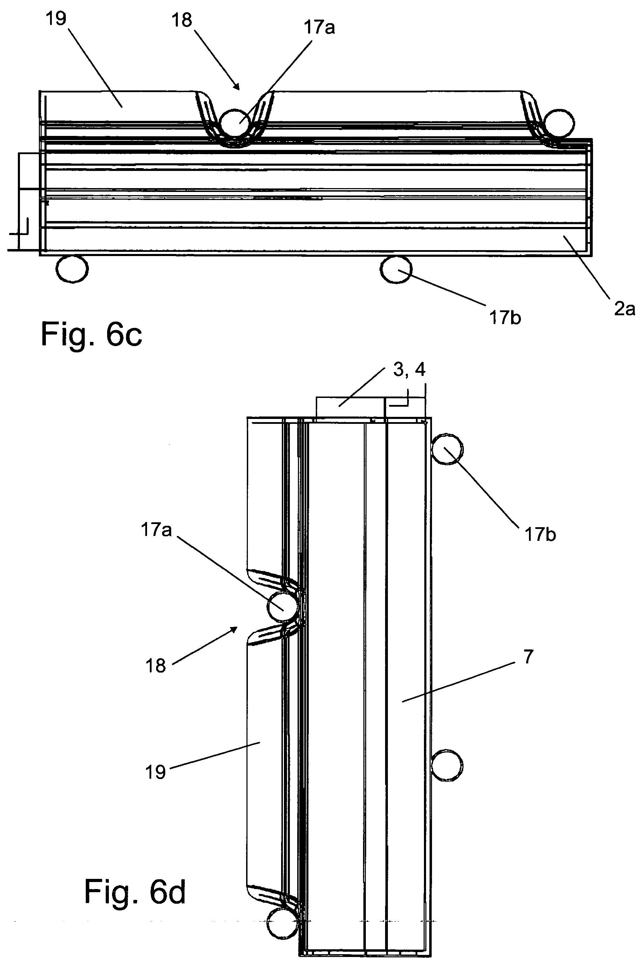

Sämtlichen der nachfolgend beschriebenen Ausführungsbeispiele nach Fig. 6a bis Fig. 9 ist gemeinsam, dass zur Montage an den Zylinderkopf eines Dreizylindermotors zwei vorliegend parallele Reihen von Verschraubungen 17 vorgesehen sind, nämlich zwei obere Verschraubungen 17a und zwei untere Verschraubungen 17b. Die Verschraubungen sind jeweils als zylindrische Kanäle definierter Länge in den Figuren dargestellt, wodurch lediglich ihr erforderlicher Raum gezeigt ist. Die zur Festlegung des Ladeluftkanals an dem Zylinderkopf dienenden Schrauben bzw. Zuganker selbst sind nicht dargestellt.

Die beiden parallelen Reihen von Verschraubungen haben vorliegend einen Abstand von 90 mm (Abstand der Kanalmitten). Der Außendurchmesser der Hohlwalze 4 ist in den Ausführungsbeispielen sehr ähnlich und beträgt jeweils zwischen 60 mm und 65 mm.

Jedes der vier Ausführungsbeispiele Fig. 6a bis Fig. 9 hat, wie im ersten Ausführungsbeispiel, einen ersten Wärmetauscher 6 und einen zweiten Wärmetauscher 8, zwischen denen eine Umlenkung der Ladeluft in einem Umlenkbereich 7 erfolgt. Ebenso liegen jeweils ein erster Durchtritt 12 und ein zweiter Durchtritt bzw. Bypass 13 vor, und die grundsätzliche Funktion des Stellglieds 4 in Form einer Hohlwalze 4 ist ebenfalls jeweils identisch.

Bei der Ausführungsform nach Fig. 6a bis Fig. 6d sind beide Wärmetauscher 6, 8 zwischen den Reihen 17a, 17b der Verschraubungen 17 angeordnet. Dies limitiert die summierte Höhe der Wärmetauscher in einer Höhenrichtung H auf vorliegend weniger als 90 mm, ermöglicht aber meist eine Erstreckung in einer Längsrichtung L, die der gesamten Breite des Zylinderkopfes entspricht.

Zudem bietet diese Bauform eine besonders einfache Möglichkeit, beide Wärmetauscher wie z.B. auch im Beispiel nach Fig. 1 als verschiedene Abschnitte eines einzelnen Wärmetauschereinsatzes auszubilden.

Die unteren Verschraubungen 17b verlaufen unterhalb des Ladeluftkanals und kollidieren weitgehend nicht mit seinem Gehäuse. Sie können zum Beispiel an nicht gezeigten Befestigungslaschen am Rand des Ladeluftaustritts 2a zusammenwirken.

Die oberen Verschraubungen 17a verlaufen abschnittsweise in Ausnehmungen 18 in Form von Sicken, die materialeinheitlich einstückig in einem zweiten Umlenkbereich 19 des Ladeluftkanals ausgebildet sind, der zudem den Sammlerbereich 2 ausbildet. Bei sämtlichen der beschriebenen Ausführungsbeispiele besteht der Ladeluftkanal aus Kunststoff, so dass die Ausnehmungen 18 im Spritzgussverfahren ausformbar sind.

Der zweite Umlenkbereich 19 folgt stromabwärts des zweiten Wärmetauschers 8 und führt zur Optimierung des Bauraums die Ladeluft in einem halbkreisförmigen Bogen um den für die Hohlwalze vorgesehenen Bauraum herum, also als um das Stellglied gebogene Führung. Bezüglich der Drehrichtung der Umlenkung erfolgt dabei bezogen auf Fig. 6a zunächst eine Umlenkung im Uhrzeigersinn im ersten Umlenkbereich 7, dann eine Umlenkung entgegen dem Uhrzeigersinn zu Anfang des zweiten Umlenkbereichs 19, und dann im weiteren Verlauf des zweiten Umlenkbereichs 19 eine Umlenkung im Uhrzeigersinn und letztlich wieder entgegen dem Uhrzeigersinn.

Insgesamt kann durch die Umlenkungen und die Änderungen der Drehrichtung eine gute Durchmischung der Ladeluft stromabwärts der Wärmetauscher 6, 8 erfolgen.

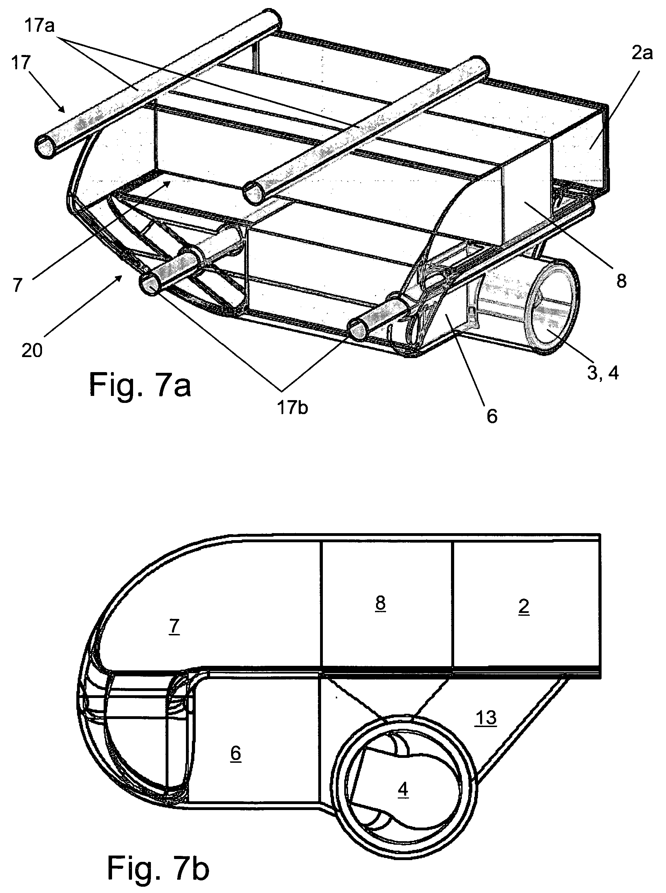

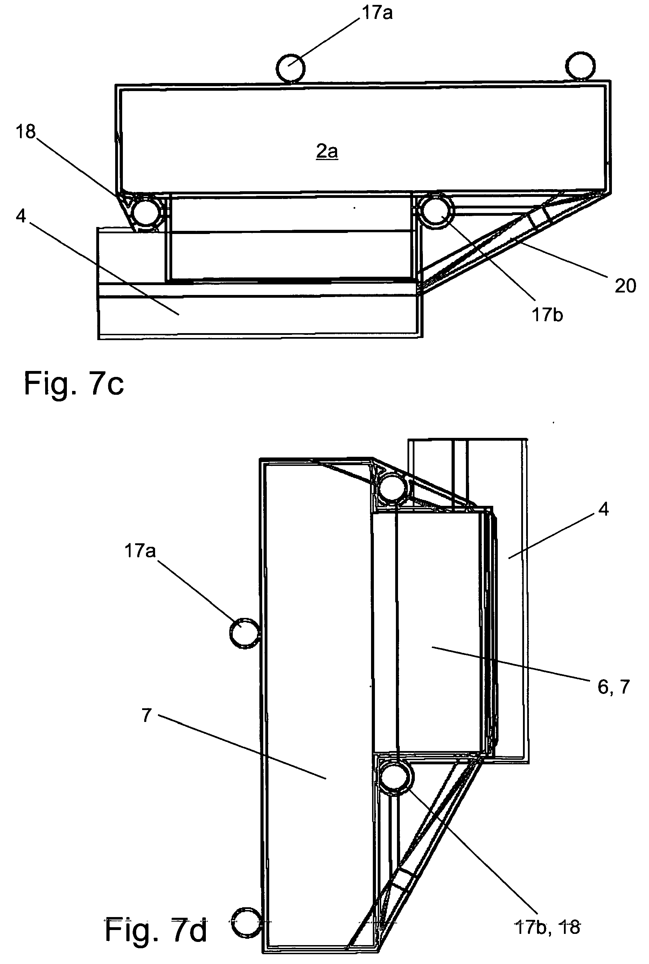

Beim Ausführungsbeispiel nach Fig. 7a bis 7d ist der erste Wärmetauscher 6 außerhalb der parallelen Reihen 17a, 17b, vorliegend überwiegend unterhalb der unteren Reihe 17b, angeordnet. Die untere Reihe der Verschraubungen 17 durchdringt das Gehäuse des Ladeluftkanals zwischen den Wärmetauschern 6, 8, wobei tunnelförmige Ausnehmungen materialeinheitlich einstückig vorgesehen sind. Bei einer nicht dargestellten können die Ausnehmungen in einer Trennebene zweier Gehäuseteile liegen.

Der untere, erste Wärmetauscher 6 ist in Längsrichtung L kürzer ausgebildet als der zweite, zwischen den Verschraubungsreihen 17a, 17b angeordnete Wärmetauscher 8. Dies gilt ebenfalls für die Länge der Hohlwalze 4, so dass in einem abgeschrägten Bereich 20 des Gehäuses einer weiteren Anforderung an den Bauraum Rechnung getragen wird. Insbesondere kann dabei der kürzere erste Wärmetauscher zwischen den beiden unteren Verschraubungen 17b positioniert sein, d.h. in der seitlichen Draufsicht nach Fig. 7b mit den unteren Verschraubungen 17b überdeckend. Hierdurch kann die Gesamtbauhöhe des Ladeluftkanals in der Höhenrichtung H klein gehalten werden.

Bei dem Beispiel nach Fig. 7a bis 7d kann, im Vergleich zum Beispiel nach Fig. 6a bis 6d, insbesondere eine größere Bauhöhe der Wärmetauscher 6, 8 in Höhenrichtung H vorliegen, wodurch der Druckabfall reduziert wird.

In dem Beispiel nach Fig. 7a bis 7d ist es zudem möglich, das die Wärmetauscher 6, 8 als verschiedene Abschnitte eines einzelnen Wärmetauschereinsatzes ausgebildet sind, wenn auch die zu kassetierende Bauform etwas komplexer ist als im Beispiel nach Fig. 6a bis 6d.

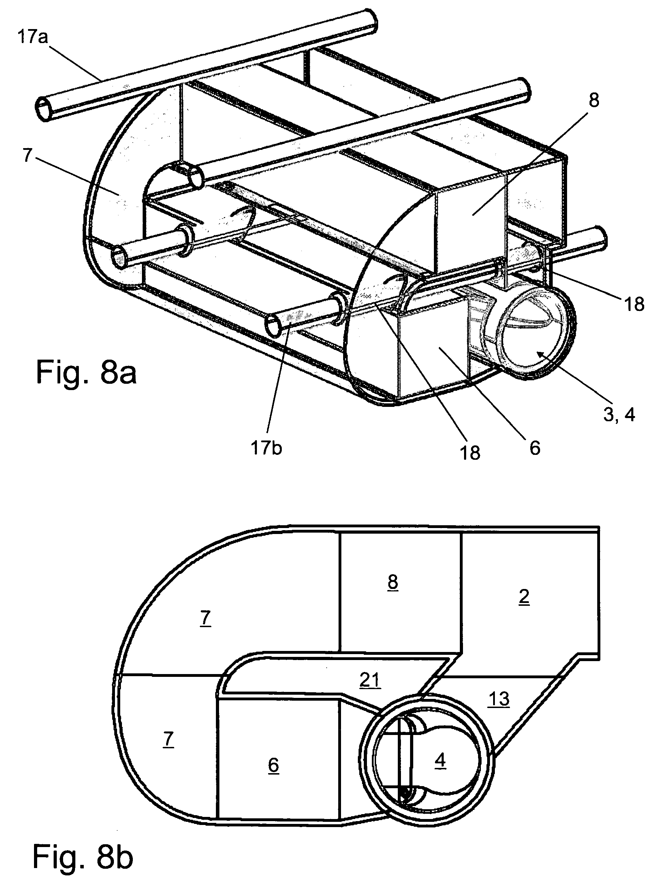

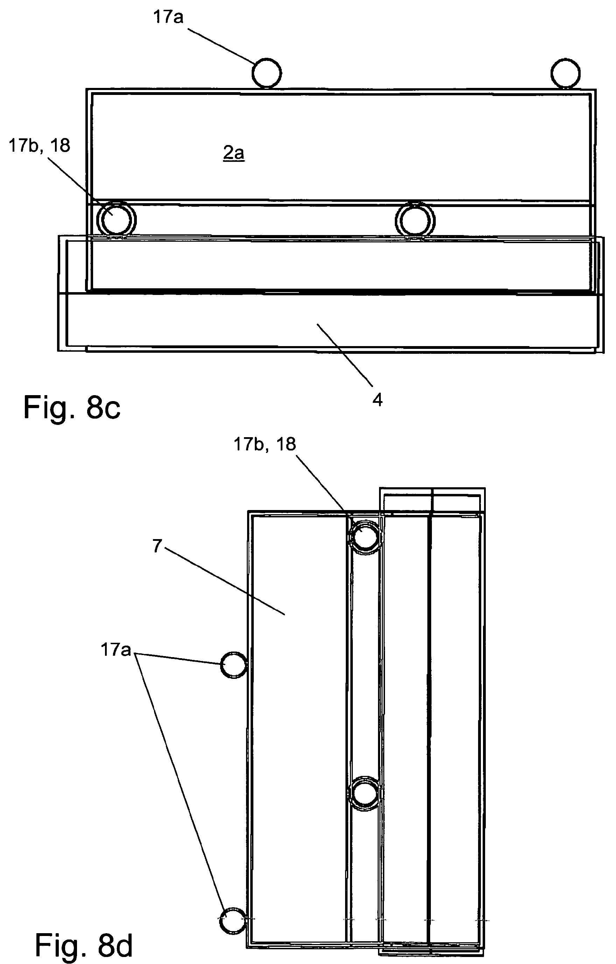

Bei dem Ausführungsbeispiel nach Fig. 8a bis 8d erstrecken sich im Unterschied zum vorhergehenden Ausführungsbeispiel beide Wärmetauscher 6, 8 über die gesamte Längsrichtung L, wobei die unteren Verschraubungen 17b zwischen den Wärmetauschern 6, 8 hindurchgehen, also der untere Wärmetauscher 6 vollständig unterhalb der Verschraubungen 17b angeordnet ist. Das Gehäuse ist in seitlicher Draufsicht (Fig. 8b) im Wesentlichen wie ein U-förmig gebogener Kanal ausgeformt, wobei ein freier Zentralbereich 21 verbleibt und der Bypass 13 nicht nur als einfache Durchbrechung einer Gehäusewand, sondern als kurzer Verbindungskanal der Hohlwalze 4 mit dem Austrittsbereich 2 ausgebildet ist.

Das Beispiel nach Fig. 8a bis Fig. 8d ermöglicht einen besonders niedrigen Druckabfall, benötigt aber eine relativ große Bauhöhe.

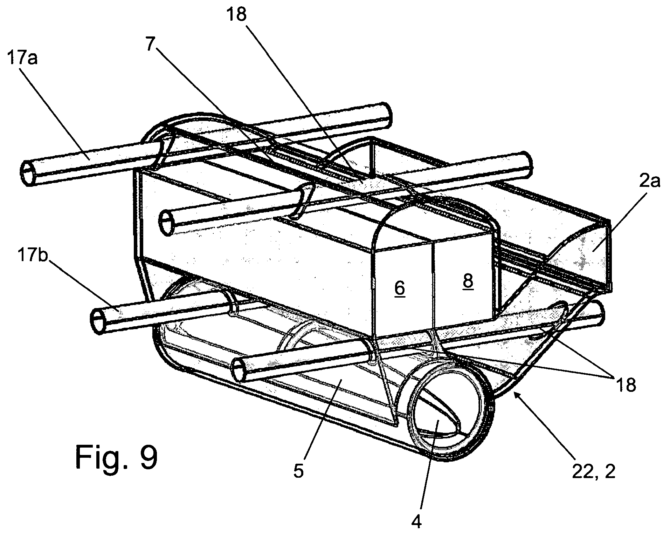

Fig. 9 zeigt ein weiteres Beispiel, bei dem insgesamt ein S-flow-Wärmetauscher vorliegt. Die Wärmetauscher 6, 8 sind ähnlich dem Beispiel nach Fig. 6a bis 6d geformt und dimensioniert, aber quasi um 90° gedreht angeordnet. Beide Wärmetauscher, die insbesondere als Abschnitte eines einzelnen Wärmetauschereinsatzes ausgeformt sind, sind vollständig zwischen den Verschraubungsreihen 17a, 17b angeordnet. Die Ladeluft durchströmt die Wärmetauscher nicht wie in den anderen Beispielen in Tiefenrichtung T, sondern in Hochrichtung H. Zwischen den Wärmetauschern 6, 8 ist ein erster Umlenkbereich 7 zur Umlenkung um 180° vorgesehen, und stromabwärts des zweiten Wärmetauschers 8 ist ein zweiter Umlenkbereich 22 bzw. Sammlerbereich 2 vorgesehen.

Der zweite Umlenkbereich 22 lenkt die Ladeluft zunächst um mehr als 90° in gegenüber dem ersten Umlenkbereich entgegengesetzter Drehrichtung um, wonach noch eine kleine Umlenkung in wiederum entgegengesetzter Richtung erfolgt. Ebenso wie der zweite Umlenkbereich im Beispiel Fig. 6a bis 6d hat der Umlenkbereich 22 somit eine Wendestelle bzw. eine Stelle der Änderung der Drehrichtung um die Längsrichtung L.

Die oberen Verschraubungen 17a durchgreifen tunnelförmige Ausnehmungen 18 im ersten Umlenkbereich 7, der hier den obersten Teil des Ladeluftkanals bildet. Die unteren Verschraubungen durchgreifen tunnelförmige Ausnehmungen 18 eines Verbindungskanals 5 zwischen Hohlwalze 4 und erstem Wärmetauscher 6 sowie tunnelförmige Ausnehmungen 18 durch den zweiten Umlenkbereich 22 bzw. Sammlerbereich 2.

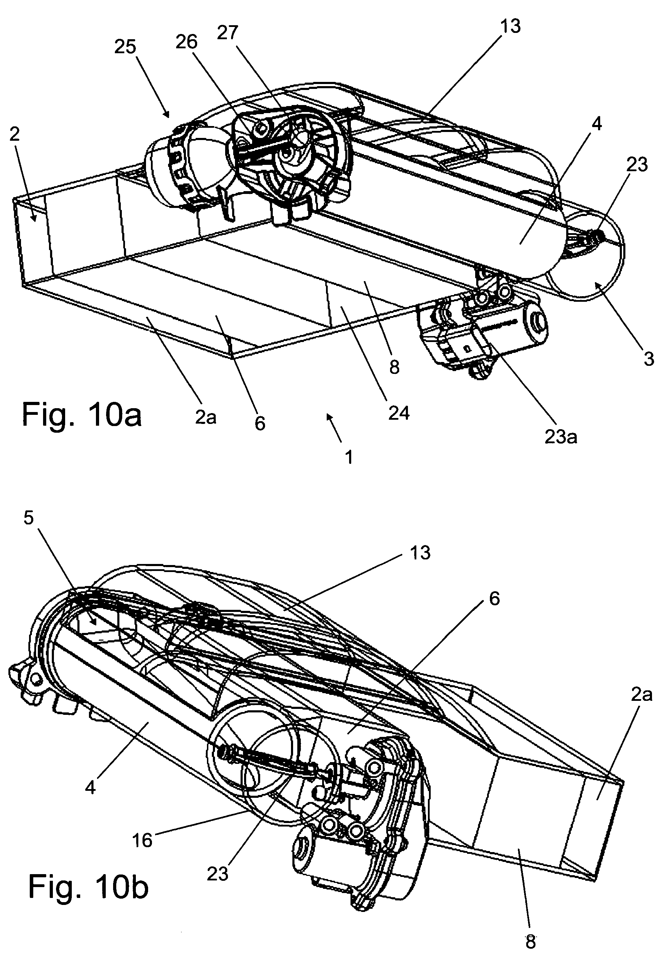

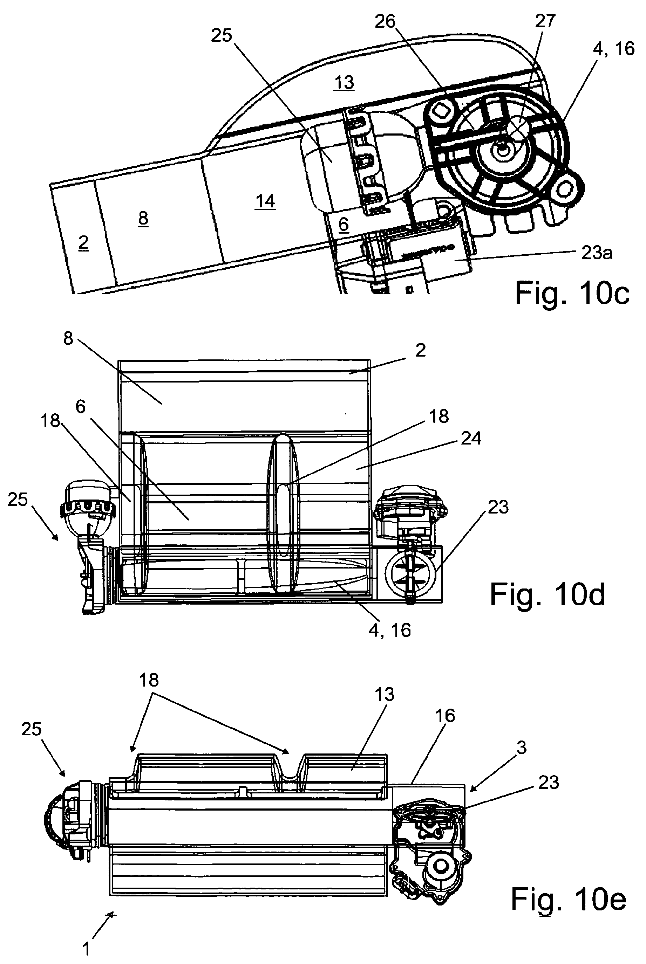

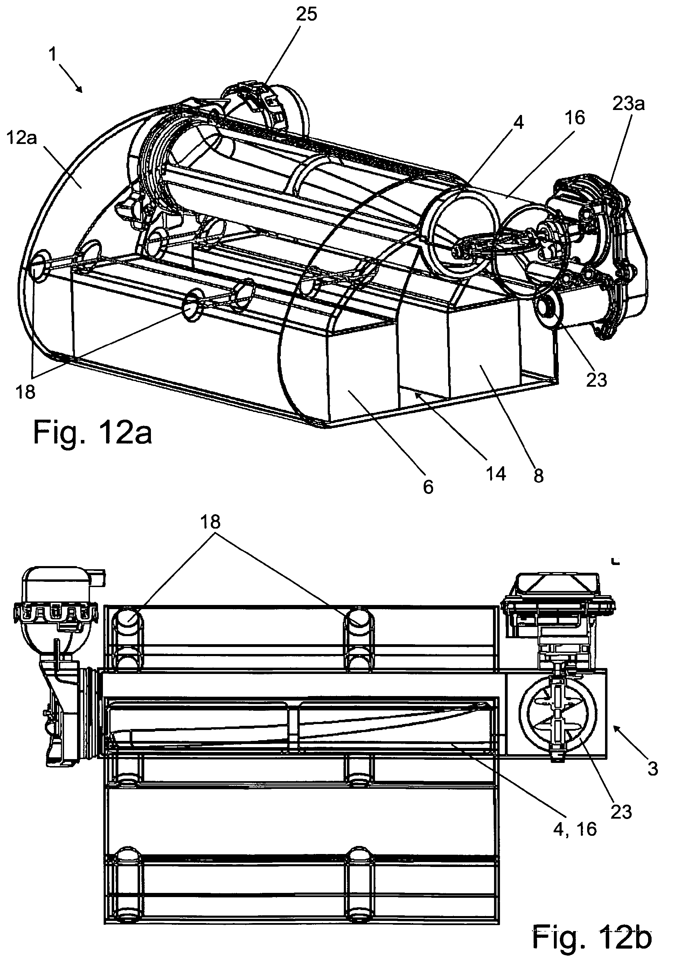

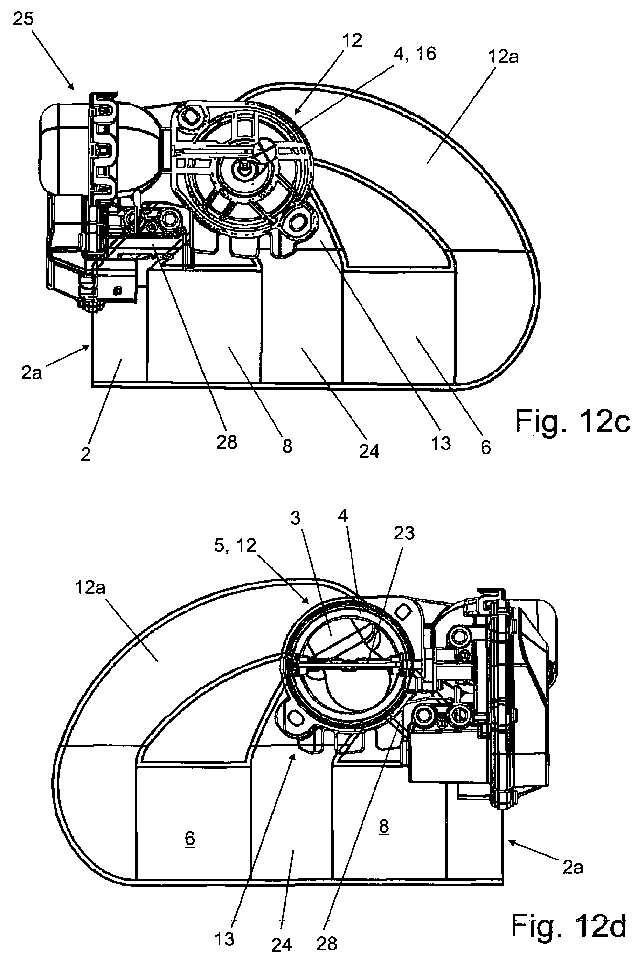

Die drei nachfolgend beschriebenen Ausführungsbeispiele nach Fig. 10 a bis Fig. 12d betreffen sämtliche Anordnungen, bei denen stromabwärts des Wärmetauschers 6 ein weiterer Wärmetauscher 8 angeordnet ist. Dabei ist jeweils zumindest ein kanalförmiger Bypass 13 vorgesehen, der an dem walzenförmigen Stellglied 4 beginnt und stromabwärts des (ersten) Wärmetauschers 6, aber stromaufwärts des weiteren (zweiten) Wärmetauschers 8 mündet. Dabei ist der erste Wärmetauscher 6 jeweils als Hochtemperatur-Wärmetauscher ausgebildet, der in einen Kühlkreislauf des Motor-Kühlmittels integriert ist. Typische Kühlmitteltemperaturen bei betriebswarmem Motor liegen hier im Bereich von 90 °C. Der nachfolgende, zweite Wärmetauscher 8 ist als Niedertemperatur-Wärmetauscher ausgebildet, der an einen Niedertemperaturzweig des Kühlkreislaufs angeschlossen ist. Die hier vorliegenden Kühlmitteltemperaturen sind deutlich niedriger und können die Temperatur der Umgebungsluft erreichen. Es ist alternativ oder ergänzend auch denkbar, dass der Niedertemperatur-Wärmetauscher von einem Kältemittel eines Kältekreises durchströmt wird.

Eine weitere Gemeinsamkeit der Ausführungsbeispiele nach Fig. 10a bis 12d besteht in einem stromaufwärts des walzenförmigen Stellglieds 4 angeordnetem Drosselglied 23, das über einen elektromotorischen Aktuator 23a antreibbar verstellbar ist. Das Drosselglied 23 ist jeweils in dem gleichen zylindrischen Kanal 16 wie das walzenförmige Stellglied 4 angeordnet und als kreisförmige Drosselklappe ausgeformt, deren Welle den zylindrischen Kanal 16 quer durchgreift. Durch das Drosselglied 23a lässt sich der Eintritt 3 bzw. zylindrische Kanal 16 so vollständig absperren, dass zum Beispiel im Fall eines Dieselmotors ein Abstellen des Motors über die Drosselklappe geleistet werden kann. Dadurch kann bezüglich des Stellglieds 4 auf aufwendige Dichtungsmaßnahmen verzichtet werden, die bei Zielsetzung einer vollständigen Absperrbarkeit nur durch das Stellglied 4 sonst erforderlich wären. Zudem kann durch die Drosselklappe 23 eine Unterstützung der Drosselungseinstellung im Bereich extremer Drosselungen erreicht werden, zum Beispiel zur Erzeugung eines ausreichenden Unterdrucks für eine Hochdruck-Abgasrückführung im Teillastbereich stromabwärts des Stellglieds 4. Zudem erfüllen sämtliche der drei Ausführungsbeispiele nach Fig. 10a bis Fig. 12d die gleichen räumlichen Anforderungen an Verschraubungen mit dem Verbrennungsmotor wie die vorstehend beschriebenen Beispiele Fig. 6a bis Fig. 9.

Im Fall des Ausführungsbeispiels nach Fig. 10a bis 10e ist der stromaufwärts des weiteren Wärmetauschers 8 mündende Bypass 13 der einzige Bypass des Ladeluftkanals. Die Ladeluft durchströmt somit in jeder Stellung des Stellglieds 4 immer zumindest den weiteren Wärmetauscher 8.

Der zylindrische Kanal 16 mit dem Stellglied 4 sowie die beiden Wärmetauscher 6, 8 befinden sich gemäß der seitlichen Draufsicht Fig. 10c im Wesentlichen in einer Ebene und sind in Strömungsrichtung der Ladeluft hintereinander angeordnet. Der Bypass 13 ist als oberhalb dieser Ebene verlaufender, flacher gebogener Kanal ausgeformt, der in einen Zwischenraum 24 zwischen den Wärmetauschern 6, 8 mündet.

In dem Bypass 13 sind Ausnehmungen 18 ausgebildet, mittels der das Gehäuse 1 durchgreifende obere Verschraubungen ähnlich dem Beispiel nach Fig. 6a-6d vorgesehen werden. Untere Verschraubungen verlaufen ebenfalls analog zu dem Beispiel nach Fig. 6a bis 6d vollständig unterhalb des Gehäuses 1.

Weiterhin ist an dem Gehäuse 1 seitlich und an dem dem Drosselglied 23 gegenüberliegenden Endbereich des zylindrischen Kanals 16 ein elektromotorischer Aktuator 25 zur Betätigung des Stellglieds 4 angeordnet. Der Aktuator 25 umfasst eine linear verschiebliche Stange 26, die über eine Kugelkopflagerung mit einem exzentrisch zu der Drehachse der Walze 4 angeordneten Zapfen 27 des walzenförmigen Stellglieds verbunden ist. Mittels angetriebener Bewegung der Stange 26 wird der Zapfen 27 und mit diesem die Walze des Stellglieds 4 verstellt, so dass die verschiedenen vorstehend beschriebenen Führungen der Ladeluft einstellbar sind.

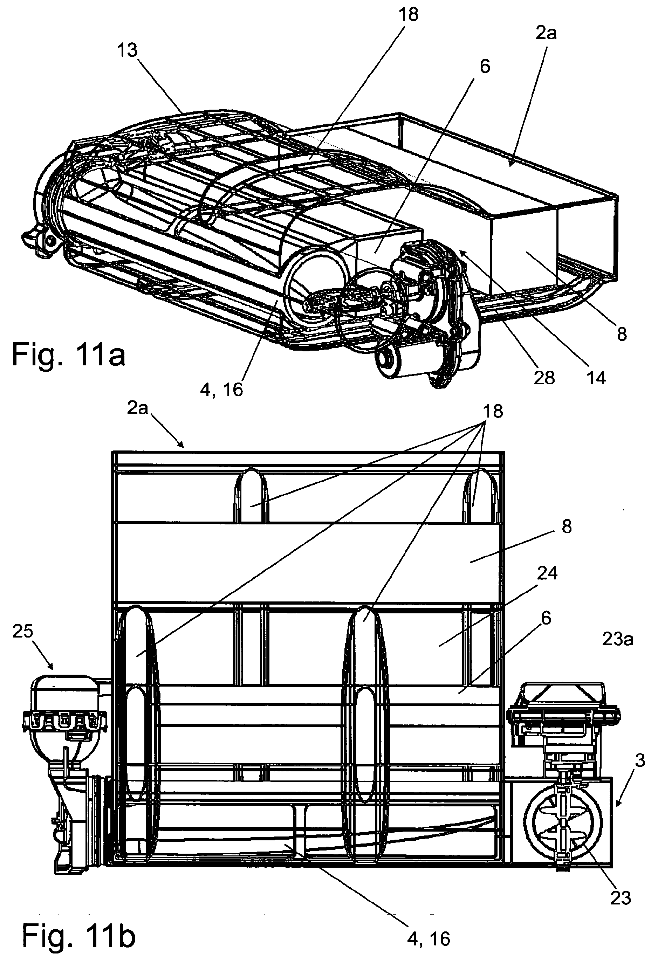

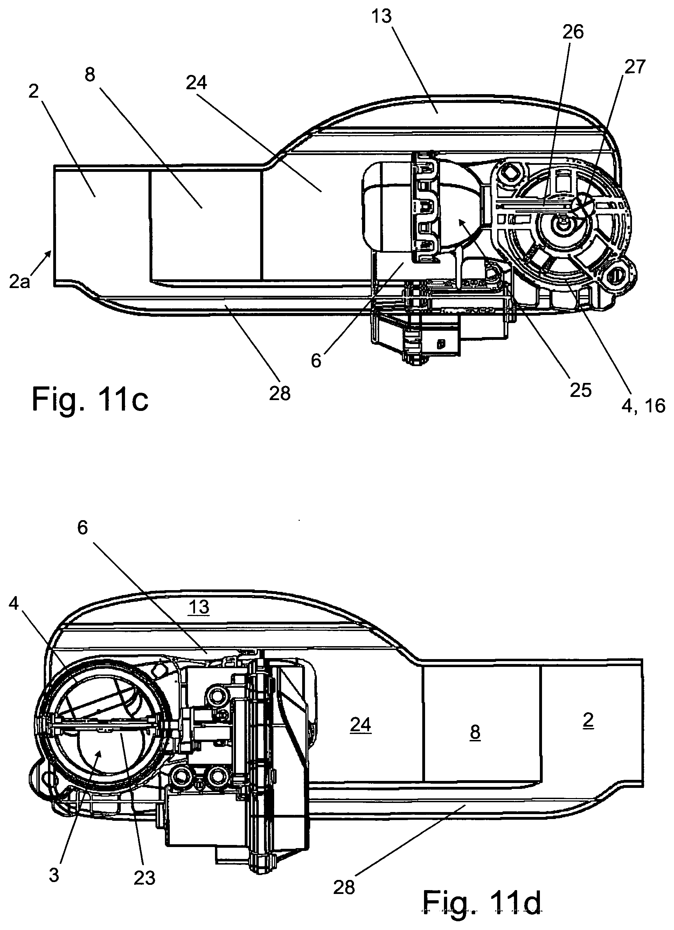

Bei dem Ausführungsbeispiel nach Fig. 11 a bis 11 d liegt im Unterschied zu dem Beispiel nach Fig. 10a bis Fig. 10e ein weiterer, zweiter Bypass 28 vor. Die Anordnung von Stellglied 4 und jedem der Wärmetauscher 6, 8 in einer Ebene ist ebenso beibehalten wie die Anordnung des ersten Bypasskanals 13 oberhalb dieser Ebene. Zusätzlich ist nun unterhalb der Ebene der weitere Bypasskanal 28 in zu dem ersten Kanal ähnlicher, flacher und sich über die Breite des Gehäuses 1 erstreckender Ausformung vorgesehen. Der zweite Bypass 28 mündet stromabwärts beider Wärmetauscher 6, 8, so dass hierdurch eine Führung der Ladeluft unter vollständiger Umgehung sämtlicher Wärmetauscher 6, 8 ermöglicht ist.

Der zweite Bypasskanal 28 hat analog dem ersten Bypasskanal 13 Ausnehmungen 18, in denen die unteren Verschraubungen des Ladeluftkanals mit dem Verbrennungsmotor angeordnet sind.

Insgesamt hat das Stellglied gemäß dem Ausführungsbeispiel nach Fig. 11a-11d somit eine zusätzliche vierte Stellung, in der die Ladeluft unter vollständiger Umgehung der Wärmetauscher 6, 8 durch den zweiten Bypass 28 geführt ist. Wie zuvor gilt: In der ersten Stellung im Sinne der Erfindung wird die Ladeluft vom Eintritt 3 durch sämtliche Wärmetauscher 6, 8 zum Austritt 2a geführt. In der zweiten Stellung wird die Ladeluft durch den (ersten Bypass) 13 unter zumindest teilweiser Umgehung des Wärmetauschers, vorliegend unter vollständiger Umgehung des ersten Wärmetauschers 6, geführt. In der dritten Stellung des Stellglieds 4 erfolgt eine gezielte Drosselung der durch beide Wärmetauscher geführten Ladeluft.

Es versteht sich ganz allgemein, dass eine gezielte Drosselung der Ladeluft je nach Anforderungen auch bezüglich der zweiten und/oder vierten Stellung, also der Führung der Ladeluft durch einen Bypass 13, 28, einstellbar sein kann.

Fig. 12a bis 12d zeigen ein weiteres Ausführungsbeispiel der Erfindung, bei dem ebenso wie im vorhergehenden Beispiel nach Fig. 11a-11d ein zweiter Bypass 28 und insgesamt eine identische Funktion des Ladeluftkanals vorliegt. Im Unterschied zum vorhergehenden Beispiel liegt eine andere räumliche Anordnung der Komponenten in dem Gehäuse vor, wodurch eine höhere und kürzere Bauform resultiert, die je nach Anforderungen vorteilhaft sein kann.

Dabei sind die beiden Wärmetauscher 6, 8 und der Austritt 2a weiterhin in einer Ebene hintereinander angeordnet. Das Stellglied 4 ist nicht in dieser Ebene angeordnet, sondern oberhalb. Von dem zylindrischen Kanal 16 des Stellglieds 4 zweigen fächerartig drei Kanäle ab, nämlich ein Hauptkanal 12a zur Führung der Ladeluft durch beide Wärmetauscher 6, 8, der erste Bypasskanal 13 zur Führung der Ladeluft vom Eintritt 3 zum Zwischenraum 24 zwischen den Wärmetauschern 6, 8 und der zweite Bypasskanal 28 zur Führung der Ladeluft vom Eintritt 3 zum Austritt 2a unter vollständiger Umgehung beider Wärmetauscher 6, 8.

Ähnlich wie in den Beispielen nach Fig. 7a-7d oder Fig. 8a-8d liegen hier tunnelförmige Ausnehmungen 18 für eine Reihe der Verschraubungen vor, die das Gehäuse 1 zwischen der Ebene des Stellglieds und der Ebene der Wärmetauscher 6, 8 durchgreifen. In alternativer Gestaltung kann das Stellglied anstatt oberhalb der Wärmetauscher 6, 8 auch unterhalb der Wärmetauscher 6, 8 angeordnet sein (z.B. durch Umdrehen der Vorrichtung um 180°).

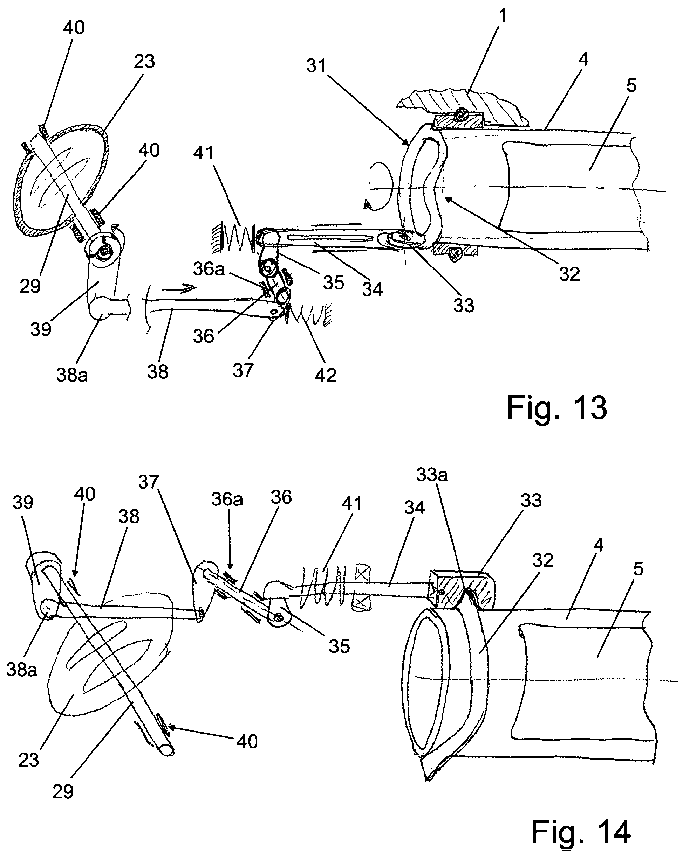

Fig. 13 zeigt eine weitere Ausführungsform der Erfindung, bei der wie im Fall der Beispiele Fig. 10a bis Fig. 12d ein zu dem Stellglied 4 zusätzliches Drosselglied 23 vorgesehen ist. Das Drosselglied 23 ist wie in den vorhergehenden Beispielen als auf einer Welle 29 festgelegte Drosselklappe ausgeformt, wobei die Welle 29 antreibbar verdrehbar ist.

Im Gegensatz zu den vorstehend beschriebenen Ausführungsbeispielen erfolgt der Antrieb der Welle 29 jedoch nicht mittels eines eigenen Aktuators (siehe z.B. Aktuator 23a in Fig. 10a), sondern durch die mittels des Aktuators 25 angetriebene Bewegung des Stellglieds 4, die mittels einer Koppelmechanik 30 auf das Drosselglied 23 übertragen wird.

Die Koppelmechanik 30 funktioniert dabei wie folgt:

An einer Stirnseite 31 des walzenförmigen Stellglieds 4 ist eine Nocke bzw. Kulissenstruktur 32 ausgebildet, an der ein Gleitstein 33 einer nur in ihrer Längsrichtung bewegbar gelagerten Schubstange 34 anliegt. Die Schubstange 34 ist mit ihrem gegenüberliegenden Ende mit einem Drehlenker 35 gekoppelt, der eine Linearbewegung als Drehbewegung auf eine Welle 36 überträgt. Die Welle 36 ist über eine dichtende Drehlagerung 36a aus dem Gehäuse 1 herausgeführt und überträgt die Drehbewegung auf einen Drehlenker 37 und einen Lenker 38, welcher wiederum mittels eines Kugelgelenks 38a einen Drehlenker 39 antreibt. Der Drehlenker 39 ist fest mit der Welle 29 der Drosselklappe 23 verbunden, welche über eine dichtende Drehlagerung 40 wieder in das Gehäuse 1 bzw. den Ladeluftkanal hineinführt.

Eine erste Feder 41 und eine zweite Feder 42 sorgen für einen Spielausgleich und für eine Kraftbeaufschlagung der Drosselklappe 23 in Schließrichtung.

Insgesamt kann auf diese Weise unmittelbar ein Verschluss der Drosselklappe in Abhängigkeit von der Stellung des Stellglieds 4 bewirkt werden. Durch geeignete Ausformung der Kulissenstruktur 32 kann je nach Bedarf erreicht werden, dass zum Beispiel ein Verschluss der Drosselklappe 23 nur in einem unmittelbaren Endbereich einer Verstellung des Stellglieds 4 erfolgt.

In Fig. 14 ist eine Abwandlung der Koppelmechanik 30 aus Fig. 13 gezeigt. Im Unterschied zu Fig. 13 ist der Gleitstein hier in zwei Richtungen zwangsgeführt, indem er mittels einer Nut 33a mit einer Kulissenstruktur 32 verkämmt, die hier als radial vorkragende Schiene auf dem Umfang des walzenförmigen Stellglieds 4 ausgebildet ist. Durch die im Vergleich zu Fig. 13 weitergehende Zwangsführung des Gleitsteins kann auf eine der beiden Federn 41, 42 verzichtet werden. Davon abgesehen erfolgt die Übertragung der Bewegung des Gleitsteins 33 auf die Drosselklappe 23 ansonsten weitgehend wie im Beispiel nach Fig. 13.

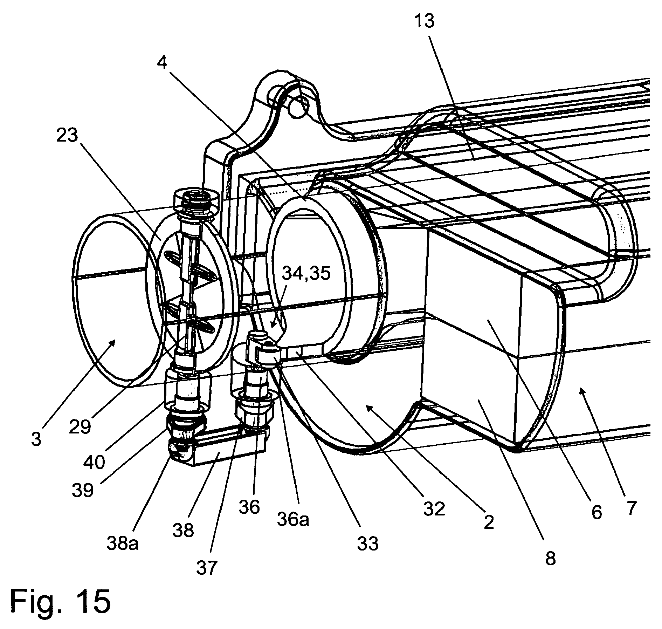

Die in Fig. 15 gezeigte auskonstruierte Variante einer Koppelmechanik lehnt sich an das Beispiel aus Fig. 13 an, bei dem die Bewegung des walzenförmigen Stellglieds mittels einer stirnseitigen Nocke 32 auf den Gleitstein 33 übertragen wird.

Es wird angemerkt, dass die Mechanik hier in Verbindung mit dem Beispiel einer weiteren, vorstehend nicht gezeigten Gehäuseform dargestellt ist. Dabei hat das Gehäuse einen Umlenkbereich 7 zwischen den beiden Wärmetauschern, in den ein (zweiter) Bypass 13 mündet, durch den der stromaufwärtige Wärmetauscher 6 umgangen werden kann. Ferner kann das walzenförmige Stellglied 4 den Luftstrom auch unter Umgehung beider Wärmetauscher 6, 8 unmittelbar in den Sammlerbereich bzw. Austritt 2 führen, analog der Stellung nach Fig. 4 im ersten Ausführungsbeispiel. Es liegen also zwei alternativ wählbare Bypässe vor.

Es versteht sich, dass die Merkmale der einzelnen Ausführungsbeispiele je nach Anforderungen beliebig miteinander kombiniert werden können. Zum Beispiel kann das zusätzliche Drosselglied 23 in jeder beschriebenen Variante, insbesondere mit oder ohne Koppelmechanik, an jedem der beschriebenen Ausführungsbeispiele vorgesehen sein.

Vorteilhaft ist, dass der Ladeluftstrom nach dem stromaufwärtigen der beiden Wärmetauscher und vor dem stromabwärtigen der beiden Wärmetauscher eine Umlenkung, insbesondere um 180°, erfährt.

Vorteilhaft ist, dass der Ladeluftstrom nach dem stromabwärtigen der beiden Wärmetauscher eine weitere Umlenkung in einem zweiten Umlenkbereich erfährt, insbesondere in Form einer um das Stellglied gebogenen Führung oder in Form einer Umlenkung um wenigstens 90°.

Vorteilhaft ist, dass die Anzahl der Verschraubungen entweder vier beträgt, insbesondere zum Anschluss an einen Dreizylindermotor, oder fünf beträgt, insbesondere zum Anschluss an einen Vierzylindermotor.

Vorteilhaft ist, dass eine Ausnehmung für die das Gehäuse durchgreifende Verschraubung materialeinheitlich einstückig mit dem Gehäuse ausgebildet ist, insbesondere in Form einer Rinne oder eines Tunnels.

Vorteilhaft ist, dass der Wärmetauscher einen Stapel von Flachrohren umfasst, wobei die Flachrohre von einem kühlenden Fluid durchströmt und von der Ladeluft umströmt werden.

Vorteilhaft ist, dass zusätzlich zu dem Stellglied ein Drosselglied vorgesehen ist, mittels dessen eine insbesondere vollständige Absperrung der Ladeluft einstellbar ist.

Vorteilhaft ist, dass das Drosselglied einen elektrisch steuerbaren Aktuator aufweist, der zusätzlich zu einem elektrisch steuerbaren Aktuator des Stellglieds vorgesehen ist, wobei insbesondere die elektrisch steuerbaren Aktuatoren von Drosselglied und Stellglied unmittelbar elektrisch verkoppelt sind.

Vorteilhaft ist, dass das Drosselglied und das Stellglied mittels einer Koppelmechanik miteinander verbunden sind.

Vorteilhaft ist, dass stromabwärts des Wärmetauschers ein weiterer Wärmetauscher vorgesehen ist, wobei in der zweiten Stellung die Ladeluft unter Umgehung des Wärmetauschers durch den Bypass geführt ist und nachfolgend den weiteren Wärmetauscher durchströmt.

Vorteilhaft ist, dass der Wärmetauscher als Hochtemperatur-Wärmetauscher und der weitere Wärmetauscher als Niedertemperatur-Wärmetauscher ausgebildet ist.

Vorteilhaft ist, dass in einer vierten Stellung des Stellglieds die Ladeluft von dem Eintritt zu einem zweiten Bypass geführt ist, wobei der zweite Bypass stromabwärts des weiteren Wärmetauschers mündet.

Vorteilhaft ist, dass das Stellglied im Wesentlichen in einer Ebene mit den beiden Wärmetauschern angeordnet ist, insbesondere zudem in einer Ebene mit dem Austritt des Ladeluftkanals.

Vorteilhaft ist, dass die beiden Wärmetauscher und der Austritt im Wesentlichen in einer Ebene angeordnet sind, wobei das Stellglied außerhalb dieser Ebene, insbesondere vollständig oberhalb oder vollständig unterhalb der Ebene, angeordnet ist.

## Patentansprüche

1. Ladeluftkanal für einen Verbrennungsmotor, umfassend ein Gehäuse (1) mit zumindest einem Eintritt (3) und zumindest einem Austritt (2a) für Ladeluft,
wobei in dem Gehäuse (1) ein Wärmetauscher (6, 8) zur Kühlung der Ladeluft angeordnet ist,
wobei an dem Gehäuse (1) ein Bypass (13) zur zumindest teilweisen Umgehung des Wärmetauschers (6, 8) angeordnet ist, wobei an dem Gehäuse (1) ein Stellglied (4) zur Beeinflussung des Ladeluftstroms angeordnet ist, wobei in einer ersten Stellung des Stellglieds (4) die Ladeluft von dem Eintritt (3) zu dem Wärmetauscher (6, 8) geführt ist, und wobei in einer zweiten Stellung des Stellglieds (4) die Ladeluft von dem Eintritt (3) zu dem Bypass (13) geführt ist, **dadurch gekennzeichnet, dass** das Stellglied (4) in einer dritten Stellung eine zumindest teilweise Reduzierung eines Durchtrittsquerschnitts für die Ladeluft ausbildet, das Stellglied (4) in einem im Wesentlichen zylindrischen Kanal (16) angeordnet ist, wobei der Ladeluftstrom im Bereich des Kanals um etwa 90°umgelenkt wird und das Stellglied (4) als um eine Achse drehbare Walze ausgebildet ist.

2. Ladeluftkanal nach Anspruch 1, **dadurch gekennzeichnet, dass** der Ladeluftkanal als Saugrohr des Verbrennungsmotors ausgebildet ist.

3. Ladeluftkanal nach einem der vorhergehenden Ansprüche, **dadurch gekennzeichnet, dass** das Stellglied (4) eine Sperrfläche aufweist, wobei die Sperrfläche eine geometrische Struktur (14) zur Reduzierung des Durchtrittsquerschnitts aufweist.

4. Ladeluftkanal nach einem der vorhergehenden Ansprüche, **dadurch gekennzeichnet, dass** das Gehäuse (1) einen Umlenkbereich (7) zur U-förmigen Umlenkung der Ladeluft aufweist, wobei der Umlenkbereich (7) insbesondere stromabwärts des Wärmetauschers (6) und stromaufwärts eines weiteren Wärmetauschers (8) angeordnet ist.

5. Ladeluftkanal nach einem der vorhergehenden Ansprüche, **dadurch gekennzeichnet, dass** das Gehäuse (1) aus zumindest zwei Gehäuseteilen aufgebaut ist.

6. Ladeluftkanal nach einem der vorhergehenden Ansprüche, **dadurch gekennzeichnet, dass** an dem Gehäuse (1) ein Zuganker (15) vorgesehen ist, wobei durch den Zuganker (15) insbesondere eine Versteifung einer Gehäusewand im Bereich einer Dichtung (14) des Stellglieds bewirkt ist.

7. Ladeluftkanal nach einem der vorhergehenden Ansprüche, **dadurch gekennzeichnet, dass** das Stellglied (4) an zumindest einer Dichtung (14) gleitend anliegt.

8. Ladeluftkanal nach Anspruch 7, **dadurch gekennzeichnet, dass** die Dichtung (14) an das Gehäuse (1) angegossen ist.

9. Ladeluftkanal nach einem der vorhergehenden Ansprüche, **dadurch gekennzeichnet, dass** das Gehäuse (1) zumindest abschnittsweise mehrwandig ausgebildet ist, wobei insbesondere ein Kühlmittel zwischen den Gehäusewänden strömt.

10. Ladeluftkanal nach einem der vorhergehenden Ansprüche, **dadurch gekennzeichnet, dass** das Gehäuse über zwei insbesondere parallelen Reihen (17a, 17b) von Verschraubungen (17) an dem Verbrennungsmotor festlegbar ist, wobei insbesondere zumindest eine der Verschraubungen (17) einen Teil des Gehäuses durchgreift.

11. Ladeluftkanal nach Anspruch 10, **dadurch gekennzeichnet, dass** der Wärmetauscher (6, 8) zwischen den parallelen Reihen von Verschraubungen (17a, 17b) angeordnet ist.

12. Ladeluftkanals nach Anspruch 11, **dadurch gekennzeichnet, dass** ein weiterer Wärmetauscher (6, 8) vorgesehen ist, wobei der weitere Wärmetauscher (6, 8) entweder zwischen den parallelen Reihen von Verschraubungen (17a, 17b) angeordnet ist oder außerhalb der parallelen Reihen von Verschraubungen (17a, 17b) angeordnet ist.

13. Ladeluftkanal nach Anspruch 12, **dadurch gekennzeichnet, dass** die Wärmetauscher (6, 8) entweder eine unterschiedliche Länge oder eine gleiche Länge in einer Längsrichtung (L) quer zu der Strömungsrichtung aufweisen.

## Claims

1. A charge air duct for an internal combustion engine, comprising a housing (1) which has at least one inlet (3) and at least one outlet (2a) for charge air,
wherein a heat exchanger (6, 8) for cooling the charge air is disposed in the housing (1),
wherein a bypass (13) for at least partially circumventing the heat exchanger (6, 8) is disposed on the housing (1), wherein a control element (4) for influencing the charge air flow is disposed on the housing (1),
wherein in a first position of the control element (4), the charge air is routed from the inlet (3) to the heat exchanger (6, 8), and wherein in a second position of the control element (4), the charge air is routed from the inlet (3) to the bypass (13), **characterized in that** in a third position, the control element (4) forms an at least partial reduction of a passage cross-section for the charge air, **in that** the control element (4) is disposed in a notably substantially cylindrical duct (16), wherein the charge air flow is notably diverted by approximately 90º in the region of the duct and **in that** the control element (4) is designed as a roller that can be rotated about an axis.

2. A charge air duct according to claim 1, **characterized in that** the charge air duct is designed as an intake manifold of the internal combustion engine.

3. A charge air duct according to any one of the preceding claims, **characterized in that** the control element (4) comprises a blocking surface, wherein the blocking surface has a geometric structure (14) so as to reduce the passage cross-section.

4. A charge air duct according to any one of the preceding claims, **characterized in that** the housing (1) comprises a diverting region (7) for the U-shaped diversion of the charge air, wherein the diverting region (7) is disposed notably downstream of the heat exchanger (6) and upstream of an additional heat exchanger (8).

5. A charge air duct according to any one of the preceding claims, **characterized in that** the housing (1) is composed of at least two housing parts.

6. A charge air duct according to any one of the preceding claims, **characterized in that** a tie rod (15) is provided on the housing (1), wherein the tie rod (15) effects in particular a reinforcement of a housing wall in the region of a gasket (14) of the control element.

7. A charge air duct according to any one of the preceding claims, **characterized in that** the control element (4) is slidingly seated against at least one gasket (14).

8. The charge air duct according to claim 7, **characterized in that** the gasket (14) is integrally cast with the housing (1).

9. A charge air duct according to any one of the preceding claims, **characterized in that** the housing (1) has an at least in sections multi-wall design, wherein notably a coolant flows between the housing walls.

10. A charge air duct according to any one of the preceding claims, **characterized in that** the housing can be fixed to the internal combustion engine by way of two, notably parallel, rows (17a, 17b) of screw connections (17), wherein in particular at least one of the screw connections (17) passes through a part of the housing.

11. The charge air duct according to claim 10, **characterized in that** the heat exchanger (6, 8) is disposed between the parallel rows of screw connections (17a, 17b).

12. The charge air duct according to claim 11, **characterized in that** an additional heat exchanger (6, 8) is provided, wherein the additional heat exchanger (6, 8) is disposed either between the parallel rows of screw connections (17a, 17b) or outside of the parallel rows of screw connections (17a, 17b).

13. The charge air duct according to claim 12, **characterized in that** the heat exchangers (6, 8) have either varying lengths, or the same length, in a longitudinal direction (L) transversely to the flow direction.

## Revendications

1. Conduit d'air de suralimentation pour un moteur à combustion interne, comprenant un carter (1) comportant au moins une entrée (3) et au moins une sortie (2a) pour de l'air de suralimentation,
où un échangeur de chaleur (6, 8) servant au refroidissement de l'air de suralimentation est disposé dans le carter (1),
où une dérivation (13) servant au contournement au moins partiel de l'échangeur de chaleur (6, 8) est disposée sur le carter (1), où un actionneur (4) servant à influencer le flux d'air de suralimentation est disposé sur le carter (1),
où, dans une première position de l'actionneur (4), l'air de suralimentation est guidé depuis l'entrée (3) jusqu'à l'échangeur de chaleur (6, 8), et où, dans une deuxième position de l'actionneur (4), l'air de suralimentation est guidé depuis l'entrée (3) jusqu'à la dérivation (13), **caractérisé en ce que** l'actionneur (4), dans une troisième position, forme une réduction au moins partielle d'une section de passage pour l'air de suralimentation, l'actionneur (4) étant disposé dans un conduit (16) pratiquement cylindrique, où le flux d'air de suralimentation est coudé de 90° environ dans la zone du conduit, l'actionneur (4) étant configuré comme un cylindre tournant autour d'un axe.

2. Conduit d'air de suralimentation selon la revendication 1, **caractérisé en ce que** le conduit d'air de suralimentation est conçu comme un collecteur d'admission du moteur à combustion interne.

3. Conduit d'air de suralimentation selon l'une ou l'autre des revendications précédentes, **caractérisé en ce que** l'actionneur (4) présente une surface d'arrêt, où la surface d'arrêt présente une structure géométrique (14) servant à la réduction de la section de passage.

4. Conduit d'air de suralimentation selon l'une quelconque des revendications précédentes, **caractérisé en ce que** le carter (1) présente une zone de retour de flux (7) prévue pour le retour de flux - en forme de U - de l'air de suralimentation, où la zone de retour de flux (7) est disposée en particulier en aval de l'échangeur de chaleur (6) et en amont d'un autre échangeur de chaleur (8).

5. Conduit d'air de suralimentation selon l'une quelconque des revendications précédentes, **caractérisé en ce que** le carter (1) est constitué au moins de deux parties de carter.

6. Conduit d'air de suralimentation selon l'une quelconque des revendications précédentes, **caractérisé en ce qu'**il est prévu un tirant d'ancrage (15) placé sur le carter (1) où, sous l'effet du tirant d'ancrage (15), il se produit dans la zone d'un joint d'étanchéité (14) de l'actionneur, en particulier un raidissement d'une paroi de carter.

7. Conduit d'air de suralimentation selon l'une quelconque des revendications précédentes, **caractérisé en ce que** l'actionneur (4) est en appui, de façon coulissante, sur au moins un joint d'étanchéité (14).

8. Conduit d'air de suralimentation selon la revendication 7, **caractérisé en ce que** le joint d'étanchéité (14) est moulé sur le carter (1).

9. Conduit d'air de suralimentation selon l'une quelconque des revendications précédentes, **caractérisé en ce que** le carter (1) est configuré, au moins partiellement, en comportant plusieurs parois, où en particulier un liquide de refroidissement circule entre les parois du carter.

10. Conduit d'air de suralimentation selon l'une quelconque des revendications précédentes, **caractérisé en ce que** le carter peut être fixé sur le moteur à combustion interne par deux rangées (17a, 17b), en particulier parallèles, d'assemblages vissés (17), où en particulier au moins l'un des assemblages vissés (17) traverse une partie du carter.

11. Conduit d'air de suralimentation selon la revendication 10, **caractérisé en ce que** l'échangeur de chaleur (6, 8) est disposé entre les rangées parallèles d'assemblages vissés (17a, 17b).

12. Conduit d'air de suralimentation selon la revendication 11, **caractérisé en ce qu'**il est prévu un autre échangeur de chaleur (6, 8), où l'autre échangeur de chaleur (6, 8) est disposé soit entre les rangées parallèles d'assemblages vissés (17a, 17b), soit est disposé à l'extérieur des rangées parallèles d'assemblages vissés (17a, 17b).

13. Conduit d'air de suralimentation selon la revendication 12, **caractérisé en ce que** les échangeurs de chaleur (6, 8) présentent suivant une direction longitudinale (L) s'étendant transversalement par rapport à la direction d'écoulement, soit une longueur variable, soit une longueur identique.
